## Europäisches Patentamt
## European Patent Office
## Office européen des brevets

(19)

(11) Numéro de publication: **0 165 834**
**B1**

(12) **FASCICULE DE BREVET EUROPEEN**

(45) Date de publication du fascicule du brevet:
01.04.87

(51) Int. Cl.⁴: **B 65 G 69/10**

(21) Numéro de dépôt: **85400888.5**

(22) Date de dépôt: **07.05.85**

(54) Procéde d'homogénéisation par mise en tas et reprise de matériaux en vrac sur une aire circulaire.

(30) Priorité: **20.06.84 FR 8409640**

(43) Date de publication de la demande:
**27.12.85 Bulletin 85/52**

(45) Mention de la délivrance du brevet:
**01.04.87 Bulletin 87/14**

(84) Etats contractants désignés:
**DE GB IT SE**

(56) Documents cités:
**EP - A - 0 011 001**
**FR - A - 1 321 051**
**FR - A - 2 189 296**
**FR - A - 2 305 370**
**US - A - 3 049 244**

(73) Titulaire: **FIVES-CAIL BABCOCK, Société anonyme, 7 rue Montalivet, F-75383 Paris Cedex 08 (FR)**

(72) Inventeur: **Hemery, Robert, 5, rue des Floralies, F-93140 Bondy (FR)**

(74) Mandataire: **Fontanié, Etienne, FIVES-CAIL BABCOCK 7, rue Montalivet, F-75383 Paris Cedex 08 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne l'homogénéisation par mise en tas et reprise de matériaux en vrac sur une aire circulaire où a été formé préalablement un tas mort.

On connaît déjà des installations dans lesquelles il est prévu, pour assurer la formation d'un tas, un jeteur animé d'un mouvement continu de rotation, ledit jeteur étant constitué par deux transporteurs opposés, alimentés alternativement par une goulotte d'inversion tournant avec le jeteur au-dessus du tas.

Des installations de ce genre sont notamment décrites dans le brevet français N° 2.189.296 et dans son certificat d'addition N° 2.305.370.

Suivant la technique antérieure, la mise en tas peut s'effectuer suivant une étendue angulaire de 180°, ce qui impose un certain temps d'attente entre la fin de la constitution d'un tas et le début de la formation du tas suivant. Il est en effet nécessaire que le tas qui vient d'être constitué ait été partiellement repris pour qu'une aire de stockage d'une étendue angulaire de 180° soit à nouveau disponible.

Pour diminuer ce temps d'attente et, à la limite, pour le supprimer, on est amené à effectuer la mise en tas sur une étendue angulaire plus réduite. A cet effet, il est connu de faire appel à un système d'alimentation de la goulotte d'inversion muni d'un dispositif dit «de rétention», ledit dispositif étant apte à stocker momentanément une certaine quantité de matériaux correspondant à l'écart entre l'étendue angulaire réelle de jetée et l'étendue angulaire théorique de 180°. Pour supprimer, par exemple, le temps d'attente, on formera alternativement, de part et d'autre du tas mort, deux tas dont l'étendue angulaire E est donnée par la formule:

$$E = \frac{1}{2} \; [360° - (\alpha + \beta)]$$

dans laquelle $\alpha$ désigne l'étendue angulaire du tas mort, et $\beta$ celle d'un appareil de reprise.

Dans la plupart des réalisations connues, la valeur de $\alpha$ est de l'ordre de 60° et celle de $\beta$ de l'ordre de 18°, de sorte que l'étendue angulaire de jetée est de l'ordre de 140°, d'où la nécessité d'une rétention sur une étendue angulaire d'environ 40°.

Les conditions d'exploitation sont alors améliorées, mais l'étendue angulaire de chaque tas alternativement formé se trouve nettement réduite.

L'invention a surtout pour but d'éviter un tel inconvénient.

Elle vise au contraire à porter l'étendue angulaire du stock homogénéisé à une valeur au moins égale à 180°, et avantageusement supérieure, tout en offrant la possibilité de donner au temps d'attente la durée minimale désirée et, à la limite, de l'annuler. L'invention vise de ce fait, sans nuire aux conditions d'exploitation, à augmenter la capacité maximale de mise en stock sur une aire de diamètre donné ou, bien entendu, à réduire, pour une capacité de mise en stock équivalente, le diamètre de l'aire nécessaire.

L'invention a plus précisément pour objet un procédé d'homogénéisation par mise en tas et reprise de matériaux en vrac, sur une aire circulaire où a été formé préalablement un tas mort, suivant lequel on forme alternativement de part et d'autre du tas mort, un tas de matériaux prenant appui sur la face considérée dudit tas mort, tandis que l'on procède à la reprise du tas précédemment formé, chaque tas de rang impair étant adossé à l'une des faces du tas mort et chaque tas de rang pair étant adossé à l'autre face dudit tas mort, caractérisé en ce que l'on divise l'espace laissé disponible sur l'aire circulaire par l'étendue angulaire du tas mort et celle d'un appareil de reprise en au moins trois secteurs dont l'un est affecté cycliquement à la mise en tas, un autre est affecté cycliquement à la reprise et le ou les autres supportent un tas formé, et en ce que l'on forme chaque tas en adossant les uns aux autres une pluralité de tas élémentaires dont l'étendue angulaire est égale à celle des secteurs sur lesquels ils sont formés, de sorte que l'étendue angulaire de chaque tas atteigne une valeur prédéterminée supérieure à 180°.

L'invention sera mieux comprise en se référant à la description qui suit, faite en regard des dessins annexés, concernant une forme particulière de réalisation d'une installation mettant en œuvre le procédé.

La figure 1 représente schématiquement l'ensemble d'une installation de ce genre.

Les figures 2 à 7 sont des schémas illustrant les différentes étapes du procédé.

La figure 8 est une vue en coupe développée des tas.

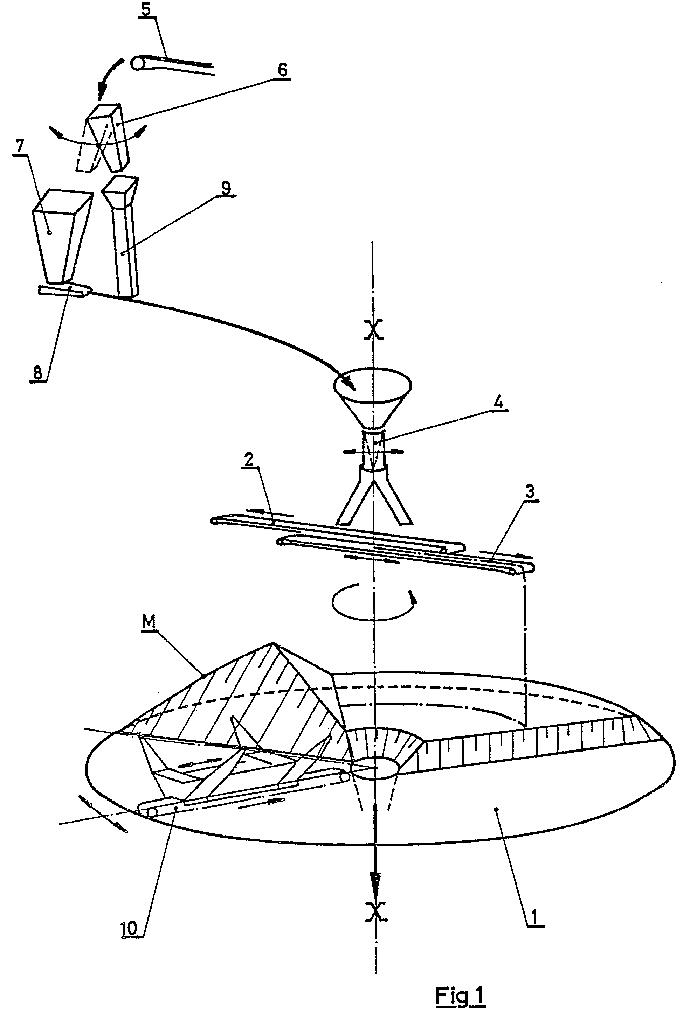

Sur la figure 1, le repère 1 désigne l'aire de stockage circulaire d'un matériau en vrac. Deux transporteurs 2 et 3, en opposition, constituent un jeteur monté rotatif autour de l'axe vertical X-X passant par le centre de l'aire 1. Ce jeteur est alimenté par une goulotte d'inversion 4 montée également rotative autour dudit axe, de manière à déverser alternativement les matériaux en vrac sur les transporteurs 2 et 3.

La goulotte 4 est elle-même alimentée par un système de distribution que l'on va maintenant décrire.

Ce système de distribution comprend un transporteur d'alimentation 5 qui déverse les matériaux dans une goulotte 6 à deux positions. Suivant une première position, les matériaux sont déversés dans une trémie de rétention 7 munie à sa base d'un dispositif d'extraction 8. Suivant une deuxième position, les matériaux sont déversés dans une goulotte 9 à passage direct. Les matériaux en provenance de cette dernière ou ceux provenant du dispositif d'extraction 8, alimentent la goulotte d'inversion 4. La goulotte 6 et le dispositif d'extraction 8 sont commandés de manière à réaliser les séquences opératoires qui vont être exposées ci-après.

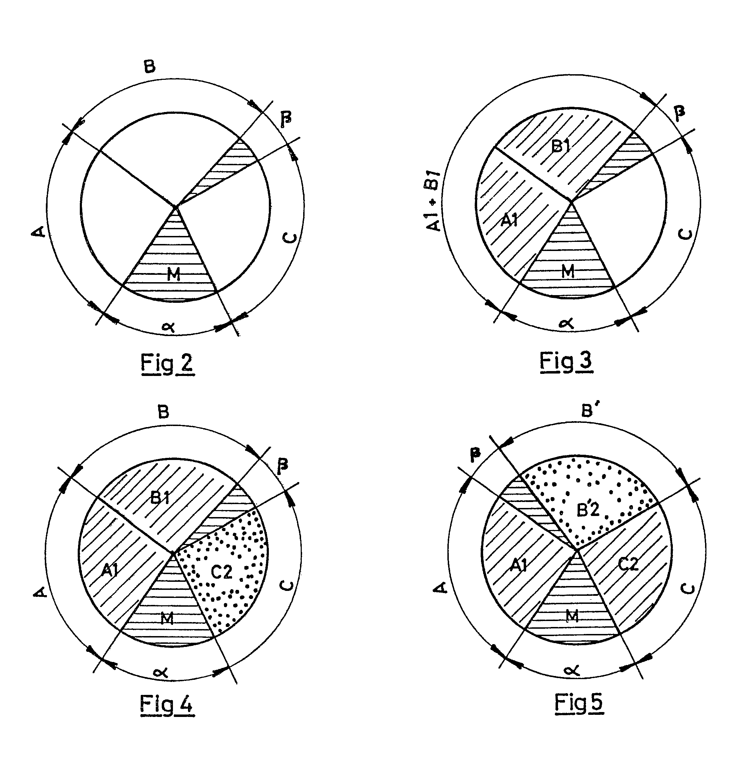

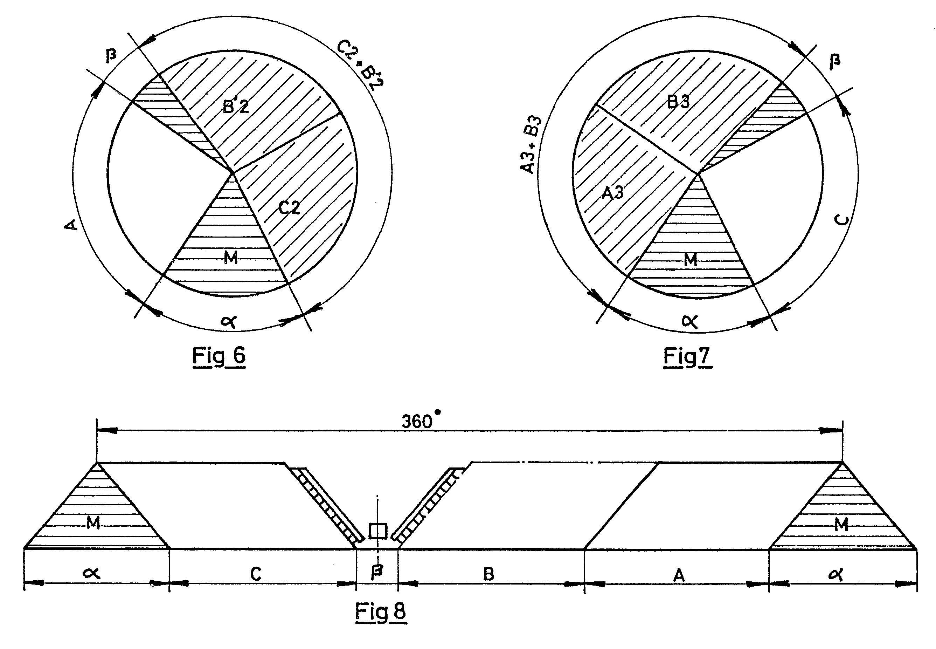

Au départ, on procède à la formation d'un tas mort M d'une étendue angulaire $\alpha$. On divise en trois secteurs A, B, C, dont l'étendue angulaire est du même ordre de grandeur, l'espace laissé disponible par l'étendue angulaire $\alpha$ du tas mort et l'étendue angulaire β d'un appareil de reprise 10 de type usuel (figures 2 et 8).

On forme ensuite successivement deux tas élémentaires $A_1$ et $B_1$ recouvrant respectivement les secteurs A et B (figure 3). L'ensemble de ces deux tas $A_1$ et $B_1$, constitue le stock homogénéisé de rang «1». On procède ensuite à la reprise de ce stock en commençant par le tas élémentaire $B_1$, tandis que la formation d'un tas élémentaire $C_2$ peut commencer sur le secteur C (figure 4). La reprise du tas $B_1$ et la constitution du tas $C_2$ ont lieu simultanément de sorte que, après formation du tas $C_2$ et dès la fin de la reprise du tas $B_1$, on peut commencer la formation d'un nouveau tas élémentaire $B'_2$ sur le secteur B' (figure 5). On notera que l'étendue angulaire de B' est égale à l'étendue angulaire de B. Lorsque le tas $B'_2$ est terminé, l'ensemble du tas $C_2$ et $B'_2$ constitue le stock de rang «2» (figure 6). Pendant la formation du tas $B'_2$, le tas $A_1$ était en cours de reprise. Après reprise complète de celui-ci, le cycle peut être poursuivi en formant sur le secteur A un tas $A_3$, puis sur le secteur B, après reprise complète du tas $B'_2$, un tas $B_3$ (figure 7). D'une façon plus générale, les tas de rang impair sont formés sur les secteurs A et B, et les tas de rang pair sont formés sur les secteurs C et B'.

Dans le cas de l'exemple illustré, l'étendue angulaire $\varsigma$ de chacun des tas est donnée par la formule:

$$\tau = \frac{1}{3}\left[360° - (\alpha + \beta)\right]$$

Si l'on donne à α et β les valeurs indiquées plus haut, soit 60° et 18°, l'angle $\varsigma$ est égal à 94°, ce qui correspond à une étendue angulaire du stock homogénéisé de 188°. La rétention doit alors s'effectuer sur une étendue angulaire de (180° − 94°) soit 86°.

Les déplacements du jeteur et de l'appareil de reprise peuvent être aisément automatisés en fonction d'un programme établi. Ces appareils sont montés rotatifs autour de l'axe X-X de l'aire circulaire, et leur vitesse de rotation est avantageusement uniforme, sauf aux points où l'appareil de reprise effectue un mouvement de retour. On remarquera que chaque fois que l'appareil de reprise arrive au contact d'une face du tas mort M, il doit être immédiatement écarté de ladite face par un mouvement de retour d'une amplitude égale à celle du secteur adjacent.

Le principe de formation d'un tas de matériaux stockés (mouvement de rotation continu des jetées du matériau sur l'aire de stockage et possibilité de déplacement radial desdites jetées) entraînant l'absence de biais dans la constitution du tas, le passage en reprise, d'un tas élémentaire au tas suivant s'opère sans discontinuité pourvu qu'ils aient été dosés de manière identique.

Bien que l'invention ait été décrite en référence à une forme particulière de réalisation, il va de soi qu'elle n'y est en rien limitée et que des modifications peuvent lui être apportées sans sortir de son domaine.

Le nombre des tas élémentaires adossés les uns aux autres, pourra être supérieur à deux, et leurs étendues angulaires pourront être égales entre elles ou différentes.

Dans le cas où un temps d'attente peut être admis, la capacité de stockage est accrue, à caractéristiques égales par ailleurs. L'accroissement de capacité est, bien entendu, d'autant plus important que le temps d'attente est plus long, alors que dans le cas de l'exemple illustré, le temps d'attente entre la fin de la constitution d'un tas élémentaire et le début de la formation du tas élémentaire suivant est supprimé.

On pourra, bien entendu, remplacer l'un quelconque des moyens décrits par un moyen techniquement équivalent.

L'invention couvre donc, outre le mode opératoire illustré, ses différentes variantes possibles.

## Revendication

Procédé d'homogénéisation par mise en tas et reprise de matériaux en vrac, sur une aire circulaire (1) où a été formé préalablement un tas mort (M), suivant lequel on forme alternativement sur chaque face du tas mort (M), un tas de matériaux prenant appui sur ladite face, tandis que l'on procède à la reprise du tas précédemment formé, chaque tas de rang impair étant adossé à l'une des faces du tas mort (M) et chaque tas de rang pair étant adossé à l'autre face dudit tas mort, caractérisé en ce que l'on divise l'espace laissé disponible sur l'aire circulaire par l'étendue angulaire (α) du tas mort (M) et celle (β) d'un appareil de reprise (10) en au moins trois secteurs dont l'un est affecté cycliquement à la mise en tas, un autre est affecté cycliquement à la reprise et le ou les autres supportent un tas formé, et en ce que l'on forme chaque tas en adossant les uns aux autres une pluralité de tas élémentaires dont l'étendue angulaire est égale à celle des secteurs sur lesquels ils sont formés, de sorte que l'étendue angulaire de chaque tas atteigne une valeur prédéterminée supérieure à 180°.

## Claim

Method of homogeneisation by piling and reclaiming bulk materials on a circular surface (1) where a dead pile (M) was formed beforehand, according to which, alternatively on each face of the dead pile (M), a pile of materials is formed which rests on the said face, while the pile formed previously is being reclaimed, each pile in an odd rank being leaned against one of the faces of the dead pile (M) and each pile in an even rank being leaned against the other face of the said dead pile, characterized by the fact that the space left available on the circular surface by the angular extent (α) of the dead pile (M) and that (β) of a reclaimer (10) is divided into at least three sectors one of which is cyclically allocated for stacking, another one is cyclically allocated for reclaiming and the other one(s) support(s) a formed pile, and by the fact that each pile is formed by leaning against one another a plurality of elementary piles the angular extent of which is equal to that of the sectors on which they are formed, so that the angular extent of each pile reaches a pre-determined value above 180°.

## Patentanspruch

Homogenisierverfahren durch Schüttgutaufhalden und rückladen in einem Kreislager (1), wo eine tote Halde (M) zuvor gebildet wurde, nach dem welchselweise auf jeder Seite der toten Halde (M) eine sich auf dieser Seite stützende Schüttguthalde gebildet wird, während die zuvor gebildete Halde rückgeladen wird, wobei jede Halde ungeradzahliger Reihe an eine Seite der toten Halde (M) und jede Halde geradzahliger Reihe an die andere Seite dieser toten Halde angelehnt wird, dadurch gekennzeichnet, dass der im Kreislager durch die tote Halde (M), die durch den Winkel (α) begrenzt wird, und einen Rückladeapparate (10), der durch den Winkel (β) begrenzt wird, frei gelassene Raum in mindestens drei Kreissektoren aufgeteilt wird, von denen einer dem Aufhalden zyklisch zugeordnet wird, ein anderer dem Rückladen zyklisch zugeordnet wird und der oder die anderen eine gebildete Halde aufnehmen, und dass jede Halde gebildet wird, indem mehrere Elementarhalden aneinander angelehnt werden, deren Bodenfläche gleich der Fläche der Kreissektoren ist, auf denen sie gebildet werden, so dass der Winkel, der jede Halde begrenzt, einen vorbestimmten Wert über 180° erreicht.

Fig 1

Fig 2

Fig 3

Fig 4

Fig 5

Fig 6

Fig 7

Fig 8

0 165 834